# FASCICULE DE BREVET EUROPEEN

(11) **EP 3 666 659 B1**
(45) Date de publication et mention de la délivrance du brevet: **01.12.2021**
(21) Numéro de dépôt: 19214246.1
(22) Date de dépôt: 06.12.2019
(51) Int. Cl.: B64D 27/26, B64D 27/18, B64D 29/06

(54) **ENSEMBLE DE MOTORISATION POUR UN AÉRONEF COMPRENANT UN SUPPORT DE CHARGE**
MOTORISIERUNGSEINHEIT FÜR EIN LUFTFAHRZEUG, DIE EINEN LASTTRÄGER UMFASST
MOTOR ASSEMBLY FOR AN AIRCRAFT COMPRISING A LOAD SUPPORT

(30) Priorité: 12.12.2018 FR 1872734
(43) Date de publication de la demande: 17.06.2020
(73) Titulaire: AIRBUS OPERATIONS, 31060 Toulouse Cedex 9 (FR)
(72) Inventeur: GARDES, Pascal, 31530 LEVIGNAC (FR); LAFONT, Laurent, 31320 PECHBUSQUE (FR); RIDRAY, Frédéric, 32600 L'ISLE JOURDAIN (FR); JALBERT, Delphine, 31100 TOULOUSE (FR); GELIOT, Jean, 31400 TOULOUSE (FR); BERNAT, Julien, 31100 TOULOUSE (FR); ORTEU, Benoit, 31000 TOULOUSE (FR); AUGE, Philippe, 31490 BRAX (FR)
(74) Mandataire: Cabinet Le Guen Maillet

(56) Documents cités:
- EP-A1- 0 784 564
- EP-A1- 1 571 081
- EP-A1- 2 554 478
- WO-A1-2018/031548

## Description

### DOMAINE TECHNIQUE

La présente invention concerne un ensemble de motorisation pour un aéronef, ledit ensemble comprenant un mât, un support de charge, une turbomachine ayant un carter de soufflante, une attache de soufflante avant pour attacher le carter de soufflante au support de charge et une attache de mât arrière pour attacher le mât au support de charge. L'invention concerne également un aéronef comportant au moins un tel ensemble de motorisation.

### ETAT DE LA TECHNIQUE ANTERIEURE

Un aéronef comporte classiquement une aile sous laquelle est fixé un mât auquel est fixée une turbomachine. La turbomachine comporte un moteur et un carter de soufflante qui sont fixés au mât via une attache moteur avant et une attache moteur arrière et le mât est lui-même fixé à une structure de l'aile de l'aéronef.

Bien qu'une telle installation donne entière satisfaction, elle est relativement encombrante. En particulier, l'attache moteur avant se positionne au sommet du carter de soufflante ce qui contraint le mât à se positionner au-dessus dudit carter de soufflante.

Le document EP-A-2 554 478 divulgue un ensemble de motorisation selon l'état de la technique.

### EXPOSE DE L'INVENTION

Un objet de la présente invention est de proposer un ensemble de motorisation alternatif qui permet un gain de place.

A cet effet, est proposé un ensemble de motorisation pour un aéronef, ledit ensemble de motorisation comportant :
- un mât destiné à être fixé sous une aile de l'aéronef,
- une turbomachine comprenant un moteur et une soufflante entourée par un carter de soufflante et disposée en amont du moteur, ladite turbomachine présentant une direction longitudinale X et un plan médian XZ,
- une nacelle entourant le moteur et le carter de soufflante et comportant un support de charge disposé en partie haute de la nacelle et des capots latéraux montés articulés de part et d'autre du support de charge et montés articulés sur le support de charge,
- une attache moteur avant fixée entre le mât et une partie avant du moteur,
- une attache moteur arrière fixée entre le mât et une partie arrière du moteur,
- une attache de soufflante avant fixée entre le carter de soufflante et le support de charge et
- une attache de mât arrière fixée entre le mât et le support de charge.

Un tel ensemble de motorisation permet une réduction de l'encombrement car la charge du turbomoteur est répartie entre le support de charge et le mât, et le mât est attaché au moteur.

Selon un premier mode de réalisation particulier, l'attache de soufflante avant comprend un ensemble de positionnement disposé au niveau du plan médian XZ, et deux systèmes à rotation disposés de part et d'autre du plan médian XZ et de l'ensemble de positionnement, l'ensemble de positionnement comprend une base solidaire de la partie haute du carter de soufflante et un plot solidaire du support de charge, s'étendant verticalement et inséré dans un alésage de la base, et chaque système à rotation fixe le carter de soufflante au support de charge et autorise une rotation autour d'un axe globalement parallèle à la direction longitudinale X.

Avantageusement, chaque système à rotation comprend une chape fixée au carter de soufflante et dont l'axe de rotation s'étend parallèlement à la direction longitudinale X, une plaque insérée et articulée dans la chape et fixée au support de charge et un arbre solidaire de la plaque et qui s'insère dans les orifices de la chape, la chape comprend des orifices de forme oblongue dont le grand axe est globalement parallèle à une direction transversale Y et dans lesquels est inséré l'arbre, et la plaque est insérée dans la chape avec un jeu entre la chape et la plaque parallèlement à la direction longitudinale X.

Avantageusement, l'attache de mât arrière comprend une première chape fixée sous le support de charge, une deuxième chape fixée sur le mât, et une plaque double disposée dans la première chape et la deuxième chape, la plaque double est montée articulée sur la première chape autour d'un premier axe de rotation et sur la deuxième chape autour de deux deuxièmes axes de rotation, le premier axe de rotation est globalement parallèle à la direction longitudinale X et inclus dans le plan médian XZ, et les deux deuxièmes axes de rotation sont globalement parallèles à la direction longitudinale X et disposés de part et d'autre du plan médian XZ.

Selon un deuxième mode de réalisation particulier, l'attache de soufflante avant comprend un ensemble de positionnement disposé au niveau du plan médian XZ, et deux systèmes à rotation disposés de part et d'autre du plan médian XZ et de l'ensemble de positionnement, l'ensemble de positionnement comprend une base solidaire de la partie haute du carter de soufflante et un plot solidaire du support de charge, s'étendant verticalement et inséré dans un alésage de la base, et chaque système à rotation fixe le carter de soufflante au support de charge et autorise une rotation autour d'un axe perpendiculaire au plan médian XZ.

Avantageusement, l'attache de mât arrière comprend deux premières chapes, chacune étant fixée sous le support de charge, une deuxième chape fixée sur le mât, et, pour chaque première chape, une bielle, chaque première chape présente un premier axe de rotation globalement parallèle à la direction longitudinale X et les deux premiers axes de rotation sont disposés de part et d'autre du plan médian XZ, la deuxième chape présente trois deuxièmes axes de rotation globalement parallèles à la direction longitudinale X dont l'un est central et inclus dans le plan médian XZ et dont les deux autres sont latéraux et disposés de part et d'autre du plan médian XZ, l'une des bielles est montée articulée sur une des premières chapes autour du premier axe de rotation correspondant et sur la deuxième chape autour du deuxième axe de rotation central et d'un deuxième axe de rotation latéral, et l'autre bielle est montée articulée sur l'autre des premières chapes autour du premier axe de rotation correspondant et sur la deuxième chape autour de l'autre deuxième axe de rotation latéral.

Selon un troisième mode de réalisation particulier, l'attache de soufflante avant comprend une première chape fixée en partie haute du carter de soufflante et présente deux premiers axes de rotation globalement parallèles à la direction longitudinale X et disposés de part et d'autre du plan médian XZ, pour chaque premier axe de rotation, une deuxième chape fixée au support de charge et disposée à l'extérieur par rapport audit premier axe de rotation, où chaque deuxième chape présente un deuxième axe de rotation globalement parallèle à la direction longitudinale X, et pour chaque premier axe de rotation, une bielle montée articulée sur la première chape autour dudit premier axe de rotation et sur la deuxième chape autour du deuxième axe de rotation correspondant.

Selon un autre mode de réalisation particulier, l'attache de soufflante avant comprend deux premières chapes fixées en partie haute du carter de soufflante de part et d'autre du plan médian XZ et présentant chacune un premier axe de rotation globalement parallèle à la direction longitudinale X, pour chaque première chape, une deuxième chape fixée au support de charge et disposée entre ladite première chape et le plan médian XZ, où chaque deuxième chape présente un deuxième axe de rotation globalement parallèle à la direction longitudinale X, et pour chaque première chape, une bielle montée articulée sur la première chape autour du premier axe de rotation correspondant et sur la deuxième chape autour du deuxième axe de rotation correspondant.

Avantageusement, l'attache de soufflante avant comporte au moins un doigt fixé au support de charge et s'étendant radialement par rapport à la direction longitudinale X, et une rainure coaxiale avec la direction longitudinale X et réalisée sur le pourtour du carter de soufflante, et l'extrémité libre de chaque doigt loge dans ladite rainure.

Avantageusement, l'attache de mât arrière comprend, de part et d'autre du plan médian XZ, une première chape fixée sous le support de charge, une deuxième chape fixée sur le mât et une bielle, chaque chape présente un axe de rotation globalement perpendiculaire au plan médian XZ, et chaque bielle est montée articulée sur une des premières chapes autour de son axe de rotation et sur une des deuxièmes chapes autour de son axe de rotation.

L'invention propose également un aéronef comportant au moins un ensemble de motorisation selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef présentant un ensemble de motorisation selon l'invention,
[Fig. 2] est une vue de côté de l'ensemble de motorisation selon l'invention,
[Fig. 3] est une vue en perspective d'un support de charge selon un premier mode de réalisation de l'invention,
[Fig. 4] est une vue de face d'une attache de soufflante avant du support de charge représentée en Fig. 3.
[Fig. 5] est une vue en perspective d'une attache de mât arrière du support de charge représentée en Fig. 3.
[Fig. 6] est une vue en perspective d'un support de charge selon un deuxième mode de réalisation de l'invention,
[Fig. 7] est une vue en perspective d'une attache de mât arrière du support de charge représentée en Fig. 6.
[Fig. 8] est une vue en perspective d'un support de charge selon un troisième mode de réalisation de l'invention,
[Fig. 9] est une vue de face d'une attache de soufflante avant du support de charge représentée en Fig. 8.
[Fig. 10] est une vue en perspective d'une attache de mât arrière du support de charge représentée en Fig 8.
[Fig. 11] est une vue de côté d'un détail de réalisation du troisième mode de réalisation de l'invention, et
[Fig. 12] est une vue de face d'un support de charge selon une variante du troisième mode de réalisation de l'invention.

### EXPOSE DETAILLE DE MODES DE REALISATION

Dans toute la description qui va suivre, par convention, la direction X correspond à la direction longitudinale de la turbomachine, cette direction étant parallèle à l'axe longitudinal X de cette turbomachine et orientée vers l'avant de l'aéronef. D'autre part, la direction Y correspond à la direction orientée transversalement par rapport à la turbomachine, et la direction Z correspond à la direction verticale ou hauteur, ces trois directions étant orthogonales entre elles. La turbomachine présente un plan médian XZ.

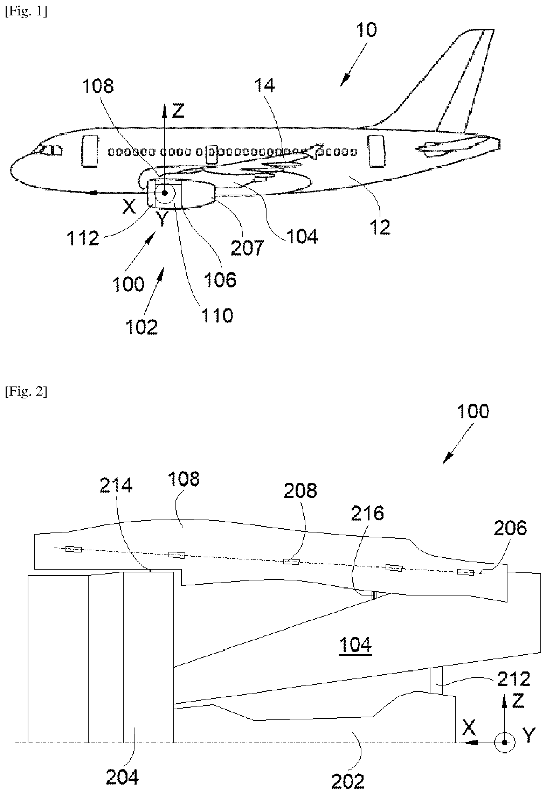

La Fig. 1 montre un aéronef 10 qui comporte un fuselage 12 auquel sont attachées deux ailes 14, de part et d'autre du fuselage 12. Sous chaque aile 14 est fixé au moins un ensemble de motorisation 100 qui comporte un mât 104 fixé sous l'aile 14 et une turbomachine 102 à double flux fixée au mât 104 et comportant un moteur 202 (Fig. 2) et une soufflante entourée par un carter de soufflante 204 et disposée en amont du moteur 202 et entraînée par le moteur 202.

L'ensemble de motorisation 100 comporte également une nacelle 106 de forme cylindrique qui entoure le moteur 202 et le carter de soufflante 204.

La Fig. 2 montre l'ensemble de motorisation 100.

La nacelle 106 comporte un support de charge 108 qui est disposé en partie haute de la nacelle 106 et des capots latéraux 110 qui sont montés articulés de part et d'autre du support de charge 108 autour d'une ligne de charnière 206. Chaque capot latéral 110 est monté articulé sur une pluralité de charnières 208 fixées au support de charge 108.

La nacelle 106 comporte également ici un capot de nez 112 qui est fixé à l'avant du support de charge 108 et qui se prolonge jusqu'à une entrée d'air par laquelle pénètre l'air alimentant la turbomachine 102.

Le mât 104 est fixé à la structure de l'aile 14 et porte le moteur 202 auquel il est fixé par une attache moteur arrière 212 fixée entre une partie arrière du mât 104 et une partie arrière du moteur 202 et une attache moteur avant fixée entre une partie avant du mât 104 et une partie avant du moteur 202, en particulier au niveau du moyeu dudit moteur 202. Dans le mode de réalisation de l'invention présenté à la Fig. 2, l'attache moteur avant est cachée par le carter de soufflante 204.

L'attache moteur avant au niveau du moyeu permet un abaissement du mât 104 et donc un gain de place. L'attache moteur avant et l'attache moteur arrière 212 ne seront pas décrites plus en détail car elles peuvent prendre toutes les formes connues de l'homme du métier.

L'ensemble de motorisation 100 comporte également une attache de soufflante avant 214 fixée entre le carter de soufflante 204 et le support de charge 108 et une attache de mât arrière 216 fixée entre le mât 104 et le support de charge 108.

L'attache de soufflante avant 214 est localisée en partie haute du carter de soufflante 204.

La mise en place de l'attache de soufflante avant 214 et de l'attache de mât arrière 216 permet de compenser la modification au niveau du mât 104 par rapport à l'état de la technique.

Un tel agencement permet également une meilleure répartition des efforts tangentiels transmis entre les capots latéraux 110 à travers le support de charge 108.

Le support de charge 108 forme un pont entre le mât 104 et le carter de soufflante 204.

L'attache de soufflante avant 214 et l'attache de mât arrière 216 peuvent prendre différentes formes dont des modes de réalisation particuliers sont décrits ci-dessous. Ces attaches permettent de transmettre les efforts générés par la turbomachine 102 en fonctionnement, de ladite turbomachine 102 au mât 104 et au support de charge 108 et à la structure de l'aile 14.

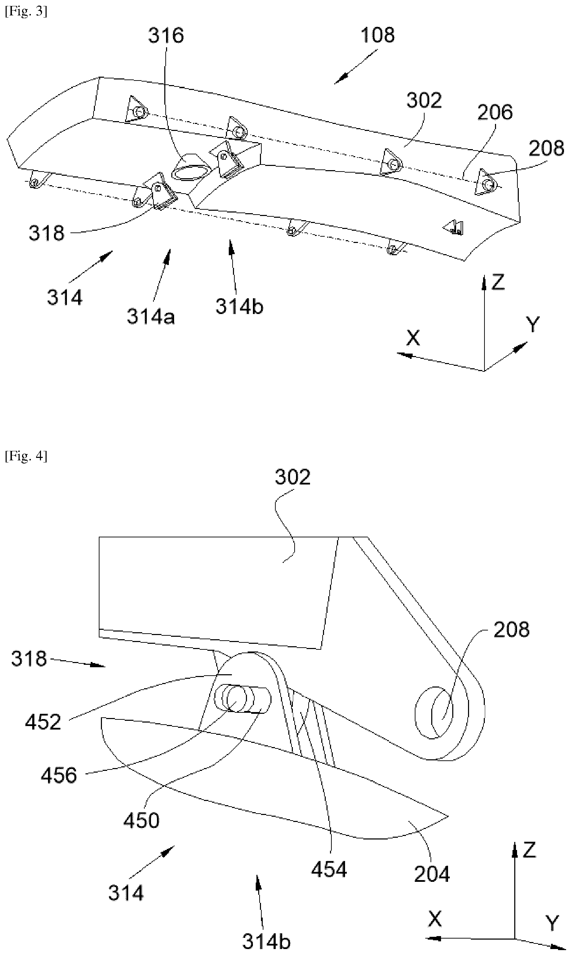

Selon un premier mode de réalisation de l'invention et en relation avec les Figs. 3 à 5, le support de charge 108 comprend une poutre 302 s'étendant longitudinalement globalement parallèlement à la direction longitudinale X.

L'attache de soufflante avant 314 comprend un ensemble de positionnement 314a, dit « spigot », disposé au niveau du plan médian XZ de la turbomachine 102. L'ensemble de positionnement 314a comprend une base 316 solidaire de la partie haute du carter de soufflante 204 et un plot solidaire de la poutre 302, et plus généralement du support de charge 108, et s'étendant verticalement et qui s'insère dans un alésage de la base 316 prévu à cet effet. L'ensemble de positionnement 314a permet la reprise des efforts en X et en Y.

La base 316 prend ici la forme d'un tronc de cône.

L'attache de soufflante avant 314 (voir Fig. 4) comprend une fixation 314b qui comprend deux systèmes à rotation 318 disposés de part et d'autre du plan médian XZ et de l'ensemble de positionnement 314a. Chaque système à rotation 318 fixe le carter de soufflante 204 au support de charge 108 et autorise une rotation autour d'un axe globalement parallèle à la direction longitudinale X. La fixation 314b permet la reprise des efforts en X et en Z.

Ici, chaque système à rotation 318 comprend une chape 452 fixée au carter de soufflante 204 et dont l'axe de rotation s'étend parallèlement à la direction longitudinale X, une plaque 454 insérée et articulée dans la chape 452 et fixée au support de charge 108 et un arbre 456 solidaire de la plaque 454 et qui s'insère dans les orifices de la chape 452.

La chape 452 comprend des orifices 450 de forme oblongue dont le grand axe est globalement parallèle à la direction transversale Y et dans lesquels est inséré l'arbre 456 de l'articulation de la plaque 454 à la chape 452, permettant ainsi un déplacement transversal selon la direction transversale Y de la chape 452. En outre, la plaque 454 est insérée dans la chape 452 avec un jeu entre la chape 452 et la plaque 454 parallèlement à la direction longitudinale X, permettant un déplacement de la chape 452 parallèlement à la direction longitudinale X par rapport à la chape 454.

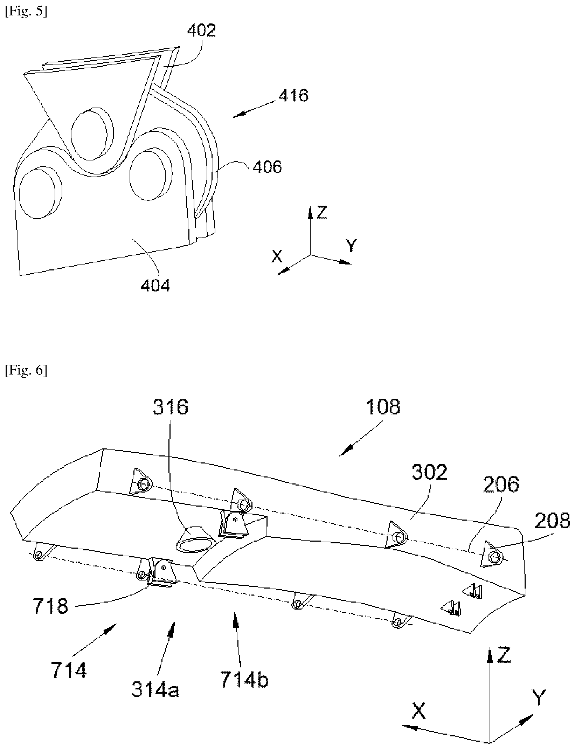

L'attache de mât arrière 416 (voir Fig. 5) comprend une première chape 402 fixée sous le support de charge 108 et une deuxième chape 404 fixée sur le mât 104.

La première chape 402 présente un premier axe de rotation globalement parallèle à la direction longitudinale X et inclus dans le plan médian XZ.

La deuxième chape 404 présente deux deuxièmes axes de rotation globalement parallèles à la direction longitudinale X et disposés de part et d'autre du plan médian XZ.

L'attache de mât arrière 416 comprend également une plaque double 406 disposée dans la première chape 402 et la deuxième chape 404. La plaque double 406 est montée articulée sur la première chape 402 autour du premier axe de rotation et sur la deuxième chape 404 autour de chaque deuxième axe de rotation. La plaque double 406 est constituée de deux plaques simples accolées.

L'attache de mât arrière 416 permet la reprise des efforts en Y et en Z.

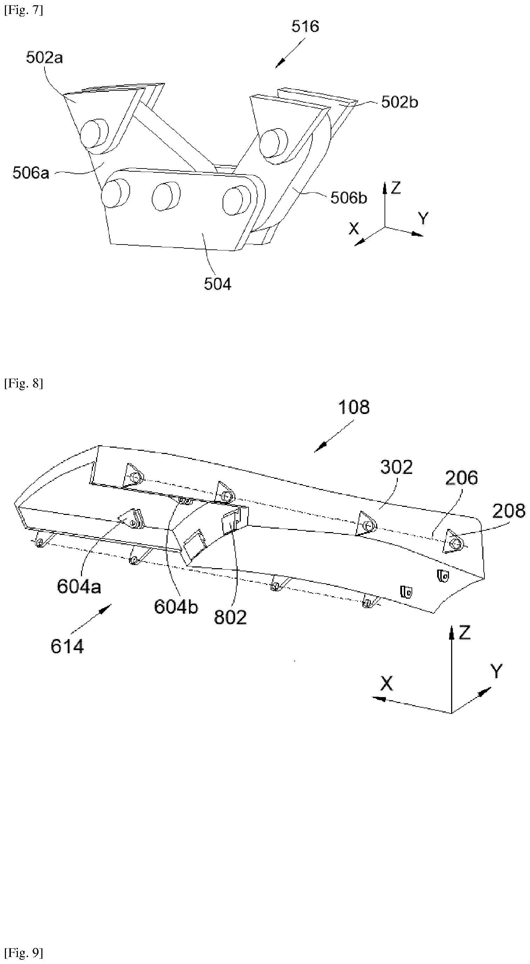

Selon un deuxième mode de réalisation de l'invention et en relation avec les Figs. 6 et 7, le support de charge 108 comprend une poutre 302 s'étendant longitudinalement globalement parallèlement à la direction longitudinale X.

De manière similaire au premier mode de réalisation, l'attache de soufflante avant 714 comprend un ensemble de positionnement 314a arrangé au niveau du plan médian XZ de la turbomachine 102 et destiné à reprendre les efforts en X et en Y et similaire à celui du premier mode de réalisation.

L'attache de soufflante avant 714 comprend une fixation 714b qui comprend deux systèmes à rotation 718 disposés de part et d'autre du plan médian XZ et de l'ensemble de positionnement 314a. Chaque système à rotation 718 fixe le carter de soufflante 204 au support de charge 108 et autorise une rotation autour d'un axe globalement parallèle à la direction transversale Y, c'est-à-dire perpendiculaire au plan médian XZ. La fixation 714b permet la reprise des efforts en Y.

Ici, chaque système à rotation 718 comprend une chape fixée au carter de soufflante 204 et dont l'axe de rotation s'étend parallèlement à la direction transversale Y, et une plaque insérée et articulée dans la chape et fixée au support de charge 108.

L'attache de mât arrière 516 (voir Fig. 7) comprend deux premières chapes 502a-b, chacune étant fixée sous le support de charge 108 et une deuxième chape 504 fixée sur le mât 104.

Pour chaque première chape 502a-b, l'attache de mât arrière 516 comprend une bielle 506a-b.

Chaque première chape 502a-b présente un premier axe de rotation globalement parallèle à la direction longitudinale X et les deux premiers axes de rotation sont disposés de part et d'autre du plan médian XZ.

La deuxième chape 504 présente trois deuxièmes axes de rotation globalement parallèles à la direction longitudinale X dont l'un est central et inclus dans le plan médian XZ et dont les deux autres sont latéraux et disposés de part et d'autre du plan médian XZ.

L'une des bielles 506a est montée articulée sur une des premières chapes 502a autour de son premier axe de rotation et sur la deuxième chape 504 autour du deuxième axe de rotation central et d'un deuxième axe de rotation latéral.

L'autre bielle 506b est montée articulée sur l'autre des premières chapes 502b autour de son premier axe de rotation et sur la deuxième chape 504 autour de l'autre deuxième axe de rotation latéral.

L'attache de mât arrière 516 permet la reprise des efforts en Y et en Z.

Selon un troisième mode de réalisation de l'invention et en relation avec les Figs. 8 à 11, le support de charge 108 comprend une poutre 302 s'étendant longitudinalement globalement parallèlement à la direction longitudinale X.

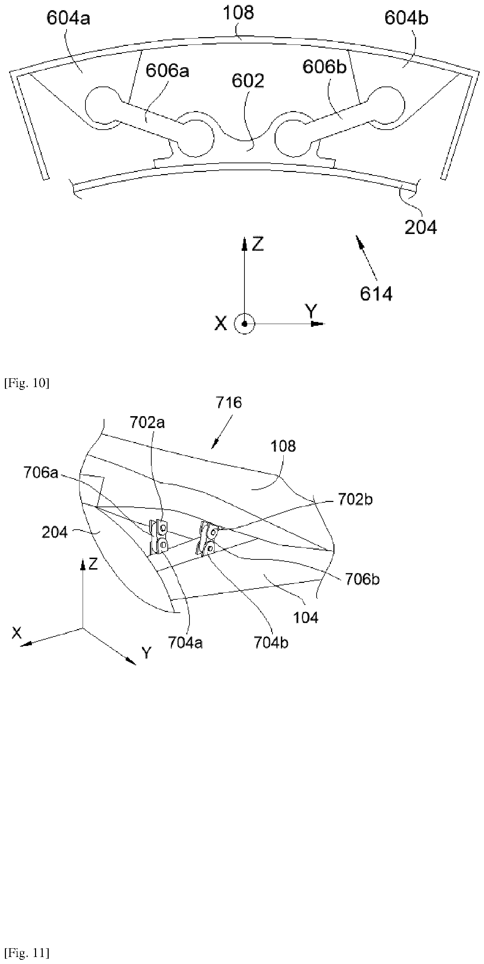

L'attache de soufflante avant 614 (voir Fig. 9) est arrangée entre le support de charge 108 et la partie haute du carter de soufflante 204. L'attache de soufflante avant 614 comprend une première chape 602 fixée en partie haute du carter de soufflante 204 et présente deux premiers axes de rotation globalement parallèles à la direction longitudinale X et disposés de part et d'autre du plan médian XZ.

Pour chaque premier axe de rotation, l'attache de soufflante avant 614 comprend une deuxième chape 604a-b fixée au support de charge 108 et disposée du côté opposé au plan médian XZ par rapport audit premier axe de rotation, c'est-à-dire à l'extérieur par rapport audit premier axe de rotation. Chaque deuxième chape 604a-b présente un deuxième axe de rotation globalement parallèle à la direction longitudinale X.

Pour chaque premier axe de rotation, l'attache de soufflante avant 614 comporte une bielle 606a-b montée articulée sur la première chape 602 autour dudit premier axe de rotation et sur la deuxième chape 604a-b autour du deuxième axe de rotation correspondant.

L'attache de soufflante avant 614 permet la reprise des efforts en Y et en Z.

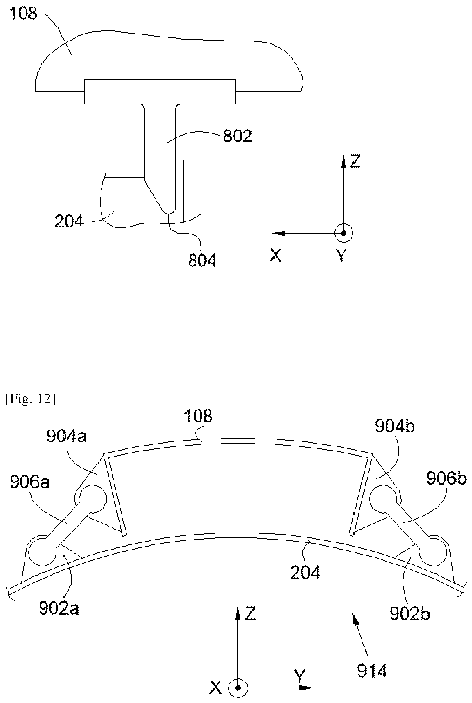

Pour reprendre les efforts en X, l'attache de soufflante avant 614 comporte au moins un doigt 802 qui est montré en détail à la Fig. 11.

Chaque doigt 802 est fixé au support de charge 108 et s'étend radialement par rapport à la direction longitudinale X.

L'attache de soufflante avant 614 comporte également une rainure 804 coaxiale avec la direction longitudinale X et réalisée sur le pourtour du carter de soufflante 204 où l'extrémité libre de chaque doigt 802 loge dans ladite rainure 804.

L'attache de mât arrière 716 (voir Fig. 10) comprend, de part et d'autre du plan médian XZ, une première chape 702a-b fixée sous le support de charge 108, une deuxième chape 704a-b fixée sur le mât 104 et une bielle 706a-b.

Chaque chape 702a-b, 704a-b présente un axe de rotation globalement perpendiculaire au plan médian XZ.

Chaque bielle 706a-b est montée articulée sur une des premières chapes 702a-b autour de son axe de rotation et sur une des deuxièmes chapes 704a-b autour de son axe de rotation.

L'attache de mât arrière 716 permet la reprise des efforts en Y et en Z.

Dans une variante du troisième mode de réalisation, et en référence avec la Fig. 12, l'attache de soufflante avant 914 est modifiée en ce que cette dernière comprend deux premières chapes 902a-b fixées en partie haute du carter de soufflante 204 de part et d'autre du plan médian XZ et présentant chacune un premier axe de rotation globalement parallèle à la direction longitudinale X.

Pour chaque première chape 902a-b, l'attache de soufflante avant 914 comprend une deuxième chape 904a-b fixée au support de charge 108 et disposée du même côté que le plan médian XZ par rapport à ladite première chape 902a-b, c'est-à-dire entre ladite première chape 902a-b et le plan médian XZ. Chaque deuxième chape 904a-b présente un deuxième axe de rotation globalement parallèle à la direction longitudinale X.

Pour chaque première chape 902a-b, l'attache de soufflante avant 914 comporte une bielle 906a-b montée articulée sur la première chape 902a-b autour du premier axe de rotation correspondant et sur la deuxième chape 904a-b autour du deuxième axe de rotation correspondant.

L'attache de soufflante avant 914 permet la reprise des efforts en Y et en Z.

Pour reprendre les efforts en X, l'attache de soufflante avant comporte un système similaire à celui de la Fig. 11, avec au moins un doigt 802 fixé au support de charge 108 et s'étendant radialement par rapport à la direction longitudinale X et également une rainure 804 coaxiale avec la direction longitudinale X et réalisée sur le pourtour du carter de soufflante 204 où l'extrémité libre de chaque doigt 802 loge dans ladite rainure 804.

## Revendications

1. Ensemble de motorisation (100) pour un aéronef (10), ledit ensemble de motorisation (100) comportant :
- un mât (104) destiné à être fixé sous une aile (14) de l'aéronef (10),
- une turbomachine (102) comprenant un moteur (202) et une soufflante entourée par un carter de soufflante (204) et disposée en amont du moteur (202), ladite turbomachine (102) présentant une direction longitudinale X et un plan médian XZ,
- une nacelle (106) entourant le moteur (202) et le carter de soufflante (204) et comportant un support de charge (108) disposé en partie haute de la nacelle (106) et des capots latéraux (110) montés articulés de part et d'autre du support de charge (108) et montés articulés sur le support de charge (108),
- une attache moteur avant fixée entre le mât (104) et une partie avant du moteur (202),
- une attache moteur arrière (212) fixée entre le mât (104) et une partie arrière du moteur (202),
- une attache de soufflante avant (214, 314, 614, 714, 914) fixée entre le carter de soufflante (204) et le support de charge (108) et
- une attache de mât arrière (216, 416, 516, 716) fixée entre le mât (104) et le support de charge (108).

2. Ensemble de motorisation (100) selon la revendication 1, où l'attache de soufflante avant (314) comprend un ensemble de positionnement (314a) disposé au niveau du plan médian XZ, et deux systèmes à rotation (318) disposés de part et d'autre du plan médian XZ et de l'ensemble de positionnement (314a), en ce que l'ensemble de positionnement (314a) comprend une base (316) solidaire de la partie haute du carter de soufflante (204) et un plot solidaire du support de charge (108), s'étendant verticalement et inséré dans un alésage de la base (316), et en ce que chaque système à rotation (318) fixe le carter de soufflante (204) au support de charge (108) et autorise une rotation autour d'un axe globalement parallèle à la direction longitudinale X.

3. Ensemble de motorisation (100) selon la revendication 2, où chaque système à rotation (318) comprend une chape (452) fixée au carter de soufflante (204) et dont l'axe de rotation s'étend parallèlement à la direction longitudinale X, une plaque (454) insérée et articulée dans la chape (452) et fixée au support de charge (108) et un arbre (456) solidaire de la plaque (454) et qui s'insère dans les orifices de la chape (452), en ce que la chape (452) comprend des orifices (450) de forme oblongue dont le grand axe est globalement parallèle à une direction transversale Y et dans lesquels est inséré l'arbre (456), et en ce que la plaque (454) est insérée dans la chape (452) avec un jeu entre la chape (452) et la plaque (454) parallèlement à la direction longitudinale X.

4. Ensemble de motorisation (100) selon l'une des revendications 2 ou 3, où l'attache de mât arrière (416) comprend une première chape (402) fixée sous le support de charge (108), une deuxième chape (404) fixée sur le mât (104), et une plaque double (406) disposée dans la première chape (402) et la deuxième chape (404), en ce que la plaque double (406) est montée articulée sur la première chape (402) autour d'un premier axe de rotation et sur la deuxième chape (404) autour de deux deuxièmes axes de rotation, en ce que le premier axe de rotation est globalement parallèle à la direction longitudinale X et inclus dans le plan médian XZ, et en ce que les deux deuxièmes axes de rotation sont globalement parallèles à la direction longitudinale X et disposés de part et d'autre du plan médian XZ.

5. Ensemble de motorisation (100) selon la revendication 1, où l'attache de soufflante avant (714) comprend un ensemble de positionnement (314a) disposé au niveau du plan médian XZ, et deux systèmes à rotation (718) disposés de part et d'autre du plan médian XZ et de l'ensemble de positionnement (314a), en ce que l'ensemble de positionnement (314a) comprend une base (316) solidaire de la partie haute du carter de soufflante (204) et un plot solidaire du support de charge (108), s'étendant verticalement et inséré dans un alésage de la base (316), et en ce que chaque système à rotation (718) fixe le carter de soufflante (204) au support de charge (108) et autorise une rotation autour d'un axe perpendiculaire au plan médian XZ.

6. Ensemble de motorisation (100) selon la revendication 4, où l'attache de mât arrière (516) comprend deux premières chapes (502a-b), chacune étant fixée sous le support de charge (108), une deuxième chape (504) fixée sur le mât (104), et, pour chaque première chape (502a-b), une bielle (506a-b), en ce que chaque première chape (502a-b) présente un premier axe de rotation globalement parallèle à la direction longitudinale X et les deux premiers axes de rotation sont disposés de part et d'autre du plan médian XZ, en ce que la deuxième chape (504) présente trois deuxièmes axes de rotation globalement parallèles à la direction longitudinale X dont l'un est central et inclus dans le plan médian XZ et dont les deux autres sont latéraux et disposés de part et d'autre du plan médian XZ, en ce que l'une des bielles (506a) est montée articulée sur une des premières chapes (502a) autour du premier axe de rotation correspondant et sur la deuxième chape (504) autour du deuxième axe de rotation central et d'un deuxième axe de rotation latéral, et en ce que l'autre bielle (506b) est montée articulée sur l'autre des premières chapes (502b) autour du premier axe de rotation correspondant et sur la deuxième chape (504) autour de l'autre deuxième axe de rotation latéral.

7. Ensemble de motorisation (100) selon la revendication 1, où l'attache de soufflante avant (614) comprend une première chape (602) fixée en partie haute du carter de soufflante (204) et présente deux premiers axes de rotation globalement parallèles à la direction longitudinale X et disposés de part et d'autre du plan médian XZ, pour chaque premier axe de rotation, une deuxième chape (604a-b) fixée au support de charge (108) et disposée à l'extérieur par rapport audit premier axe de rotation, où chaque deuxième chape (604a-b) présente un deuxième axe de rotation globalement parallèle à la direction longitudinale X, et pour chaque premier axe de rotation, une bielle (606a-b) montée articulée sur la première chape (602) autour dudit premier axe de rotation et sur la deuxième chape (604a-b) autour du deuxième axe de rotation correspondant.

8. Ensemble de motorisation (100) selon la revendication 1, où l'attache de soufflante avant (914) comprend deux premières chapes (902a-b) fixées en partie haute du carter de soufflante (204) de part et d'autre du plan médian XZ et présentant chacune un premier axe de rotation globalement parallèle à la direction longitudinale X, pour chaque première chape (902a-b), une deuxième chape (904a-b) fixée au support de charge (108) et disposée entre ladite première chape (902a-b) et le plan médian XZ, où chaque deuxième chape (904a-b) présente un deuxième axe de rotation globalement parallèle à la direction longitudinale X, et pour chaque première chape (902a-b), une bielle (906a-b) montée articulée sur la première chape (902a-b) autour du premier axe de rotation correspondant et sur la deuxième chape (904a-b) autour du deuxième axe de rotation correspondant.

9. Ensemble de motorisation (100) selon l'une des revendications 7 ou 8, où l'attache de soufflante avant (614, 914) comporte au moins un doigt (802) fixé au support de charge (108) et s'étendant radialement par rapport à la direction longitudinale X, et une rainure (804) coaxiale avec la direction longitudinale X et réalisée sur le pourtour du carter de soufflante (204), et en ce que l'extrémité libre de chaque doigt (802) loge dans ladite rainure (804).

10. Ensemble de motorisation (100) selon l'une des revendications 7 à 9, où l'attache de mât arrière (716) comprend, de part et d'autre du plan médian XZ, une première chape (702a-b) fixée sous le support de charge (108), une deuxième chape (704a-b) fixée sur le mât (104) et une bielle (706a-b), en ce que chaque chape (702a-b, 704a-b) présente un axe de rotation globalement perpendiculaire au plan médian XZ, et en ce que chaque bielle (706a-b) est montée articulée sur une des premières chapes (702a-b) autour de son axe de rotation et sur une des deuxièmes chapes (704a-b) autour de son axe de rotation.

11. Aéronef (10) comportant au moins un ensemble de motorisation (100) selon l'une des revendications précédentes.

## Patentansprüche

1. Motorisierungseinheit (100) für ein Luftfahrzeug (10), wobei die Motorisierungseinheit (100) beinhaltet:
- einen Pylon (104), der dazu bestimmt ist, unter einer Tragfläche (14) des Luftfahrzeugs (10) befestigt zu werden,
- ein Turbotriebwerk (102), das einen Motor (202) und ein Gebläse umfasst, das von einem Gebläsegehäuse (204) umgeben ist und stromauf des Motors (202) angeordnet ist, wobei das Turbotriebwerk (102) eine Längsrichtung X und eine Mittelebene XZ aufweist,
- eine Gondel (106), die den Motor (202) und das Gebläsegehäuse (204) umgibt und einen Lastträger (108) beinhaltet, der im oberen Teil der Gondel (106) angeordnet ist, und seitliche Verkleidungen (110), die beidseits des Lastträgers (108) angelenkt sind und an den Lastträger (108) angelenkt sind,
- eine vordere Motoraufhängung, die zwischen dem Pylon (104) und einem vorderen Teil des Motors (202) befestigt ist,
- eine hintere Motoraufhängung (212), die zwischen dem Pylon (104) und einem hinteren Teil des Motors (202) befestigt ist,
- eine vordere Gebläseaufhängung (214, 314, 614, 714, 914), die zwischen dem Gebläsegehäuse (204) und dem Lastträger (108) befestigt ist, und
- eine hintere Pylonaufhängung (216, 416, 516, 716), die zwischen dem Pylon (104) und dem Lastträger (108) befestigt ist.

2. Motorisierungseinheit (100) nach Anspruch 1, wobei die vordere Gebläseaufhängung (314) eine auf Höhe der Mittelebene XZ angeordnete Positionierungseinheit (314a) und zwei beidseits der Mittelebene XZ und der Positionierungseinheit (314a) angeordnete drehbare Systeme (318) umfasst, dass die Positionierungseinheit (314a) eine fest mit dem oberen Teil des Gebläsegehäuses (204) verbundene Basis (316) umfasst und ein fest mit dem Lastträger (108) verbundenes Kontaktstück, das sich vertikal erstreckt und in eine Bohrung der Basis (316) eingeführt ist, und dass jedes drehbare System (318) das Gebläsegehäuse (204) am Lastträger (108) befestigt und eine Drehung um eine zur Längsrichtung X im Wesentlichen parallele Achse herum zulässt.

3. Motorisierungseinheit (100) nach Anspruch 2, wobei jedes drehbare System (318) ein Gabelgelenk (452) umfasst, das am Gebläsegehäuse (204) befestigt ist und dessen Drehachse sich parallel zur Längsrichtung X erstreckt, eine Platte (454), die in das Gabelgelenk (452) eingeführt und darin angelenkt ist und am Lastträger (108) befestigt ist, und eine Welle (456), die fest mit der Platte (454) verbunden ist und in die Öffnungen des Gabelgelenks (452) eingeführt ist, dass das Gabelgelenk (452) längliche Öffnungen (450) umfasst, deren große Achse im Wesentlichen parallel zu einer Querrichtung Y ist und in welche die Welle (456) eingeführt ist, und dass die Platte (454) in das Gabelgelenk (452) mit einem Spiel zwischen dem Gabelgelenk (452) und der Platte (454) parallel zur Längsrichtung X eingeführt ist.

4. Motorisierungseinheit (100) nach einem der Ansprüche 2 oder 3, wobei die hintere Pylonaufhängung (416) ein unter dem Lastträger (108) befestigtes erstes Gabelgelenk (402), ein am Pylon (104) befestigtes zweites Gabelgelenk (404) und eine in dem ersten Gabelgelenk (402) und dem zweiten Gabelgelenk (404) angeordnete doppelte Platte (406) umfasst, dass die doppelte Platte (406) an das erste Gabelgelenk (402) um eine erste Drehachse herum und an das zweite Gabelgelenk (404) um zwei zweite Drehachsen herum angelenkt ist, dass die erste Drehachse im Wesentlichen parallel zur Längsrichtung X ist und in der Mittelebene XZ enthalten ist und dass die beiden zweiten Drehachsen im Wesentlichen parallel zur Längsrichtung X sind und beidseits der Mittelebene XZ angeordnet sind.

5. Motorisierungseinheit (100) nach Anspruch 1, wobei die vordere Gebläseaufhängung (714) eine auf Höhe der Mittelebene XZ angeordnete Positionierungseinheit (314a) und zwei beidseits der Mittelebene XZ und der Positionierungseinheit (314a) angeordnete drehbare Systeme (718) umfasst, dass die Positionierungseinheit (314a) eine fest mit dem oberen Teil des Gebläsegehäuses (204) verbundene Basis (316) und ein fest mit dem Lastträger (108) verbundenes Kontaktstück umfasst, das sich vertikal erstreckt und in eine Bohrung der Basis (316) eingeführt ist, und dass jedes drehbare System (718) das Gebläsegehäuse (204) am Lastträger (108) befestigt und eine Drehung um eine zur Mittelebene XZ senkrechte Achse herum zulässt.

6. Motorisierungseinheit (100) nach Anspruch 4, wobei die hintere Pylonaufhängung (516) zwei erste Gabelgelenke (502a-b), die jeweils unter dem Lastträger (108) befestigt sind, ein am Pylon (104) befestigtes zweites Gabelgelenk (504) und, für jedes erste Gabelgelenk (502ab), ein Pleuel (506a-b) umfasst, dass jedes erste Gabelgelenk (502a-b) eine erste Drehachse aufweist, die im Wesentlichen parallel zur Längsrichtung X ist, und die beiden ersten Drehachsen beidseits der Mittelebene XZ angeordnet sind, dass das zweite Gabelgelenk (504) drei zweite Drehachsen aufweist, die im Wesentlichen parallel zur Längsrichtung X sind, von denen eine zentral und in der Mittelebene XZ enthalten ist und von denen die beiden anderen seitlich und beidseits der Mittelebene XZ angeordnet sind, dass eines der Pleuel (506a) an eines der ersten Gabelgelenke (502a) um die entsprechende erste Drehachse herum und an das zweite Gabelgelenk (504) um die zweite zentrale Drehachse und eine zweite seitliche Drehachse herum angelenkt ist und dass das andere Pleuel (506b) an das andere der ersten Gabelgelenke (502b) um die entsprechende erste Drehachse herum und an das zweite Gabelgelenk (504) um die andere zweite seitliche Drehachse herum angelenkt ist.

7. Motorisierungseinheit (100) nach Anspruch 1, wobei die vordere Gebläseaufhängung (614) ein erstes Gabelgelenk (602) umfasst, das im oberen Teil des Gebläsegehäuses (204) befestigt ist und zwei erste Drehachsen aufweist, die im Wesentlichen parallel zur Längsrichtung X sind und beidseits der Mittelebene XZ angeordnet sind, für jede erste Drehachse ein zweites Gabelgelenk (604a-b), das am Lastträger (108) befestigt ist und in Bezug auf die erste Drehachse außen angeordnet ist, wobei jedes zweite Gabelgelenk (604a-b) eine zweite Drehachse aufweist, die im Wesentlichen parallel zur Längsrichtung X ist, und für jede erste Drehachse ein Pleuel (606a-b), das an das erste Gabelgelenk (602) um die erste Drehachse herum und an das zweite Gabelgelenk (604a-b) um die entsprechende zweite Drehachse herum angelenkt ist.

8. Motorisierungseinheit (100) nach Anspruch 1, wobei die vordere Gebläseaufhängung (914) zwei erste Gabelgelenke (902a-b) umfasst, die im oberen Teil des Gebläsegehäuses (204) beidseits der Mittelebene XZ befestigt sind und jeweils eine erste Drehachse aufweisen, die im Wesentlichen parallel zur Längsrichtung X ist, für jedes erste Gabelgelenk (902a-b) ein zweites Gabelgelenk (904a-b), das am Lastträger (108) befestigt ist und zwischen dem ersten Gabelgelenk (902a-b) und der Mittelebene XZ angeordnet ist, wobei jedes zweite Gabelgelenk (904a-b) eine zweite Drehachse aufweist, die im Wesentlichen parallel zur Längsrichtung X ist, und für jedes erste Gabelgelenk (902a-b) ein Pleuel (906a-b), das an das erste Gabelgelenk (902a-b) um die entsprechende erste Drehachse herum und an das zweite Gabelgelenk (904a-b) um die entsprechende zweite Drehachse herum angelenkt ist.

9. Motorisierungseinheit (100) nach einem der Ansprüche 7 oder 8, wobei die vordere Gebläseaufhängung (614, 914) mindestens einen Finger (802) beinhaltet, der am Lastträger (108) befestigt ist und sich in Bezug auf die Längsrichtung X radial erstreckt, und eine Nut (804), die koaxial zur Längsrichtung X ist und am Umfang des Gebläsegehäuses (204) ausgeführt ist, und dass das freie Ende jedes Fingers (802) in der Nut (804) aufgenommen ist.

10. Motorisierungseinheit (100) nach einem der Ansprüche 7 bis 9, wobei die hintere Pylonaufhängung (716) beidseits der Mittelebene XZ ein erstes Gabelgelenk (702a-b), das unter dem Lastträger (108) befestigt ist, ein zweites Gabelgelenk (704a-b), das am Pylon (104) befestigt ist, und ein Pleuel (706a-b) umfasst, dass jedes Gabelgelenk (702a-b, 704a-b) eine Drehachse aufweist, die im Wesentlichen senkrecht zur Mittelebene XZ ist, und dass jedes Pleuel (706a-b) an eines der ersten Gabelgelenke (702a-b) um seine Drehachse herum und an eines der zweiten Gabelgelenke (704a-b) um seine Drehachse herum angelenkt ist.

11. Luftfahrzeug (10) mit mindestens einer Motorisierungseinheit (100) nach einem der vorhergehenden Ansprüche.

## Claims

1. Propulsion assembly (100) for an aircraft (10), said propulsion assembly (100) having:
- a pylon (104) intended to be fastened below a wing (14) of the aircraft (10),
- a turbomachine (102) comprising an engine (202) and a fan that is enclosed by a fan casing (204) and is disposed upstream of the engine (202), said turbomachine (102) having a longitudinal direction X and a median plane XZ,
- a nacelle (106) surrounding the engine (202) and the fan casing (204) and having a load support (108) disposed in the top part of the nacelle (106) and lateral cowls (110) mounted in a hinged manner on either side of the load support (108) and mounted in a hinged manner on the load support (108),
- a front engine attachment fastened between the pylon (104) and a front part of the engine (202),
- a rear engine attachment (212) fastened between the pylon (104) and a rear part of the engine (202),
- a front fan attachment (214, 314, 614, 714, 914) fastened between the fan casing (204) and the load support (108), and
- a rear pylon attachment (216, 416, 516, 716) fastened between the pylon (104) and the load support (108) .

2. Propulsion assembly (100) according to Claim 1, where the front fan attachment (314) comprises a positioning assembly (314a) disposed on the median plane XZ, and two rotational systems (318) disposed on either side of the median plane XZ and of the positioning assembly (314a), in that the positioning assembly (314a) comprises a base (316) that is secured to the top part of the fan casing (204) and a peg that is secured to the load support (108), extends vertically and is inserted into a bore in the base (316), and in that each rotational system (318) fastens the fan casing (204) to the load support (108) and allows rotation about an axis generally parallel to the longitudinal direction X.

3. Propulsion assembly (100) according to Claim 2, where each rotational system (318) comprises a clevis (452) which is fastened to the fan casing (204) and the axis of rotation of which extends parallel to the longitudinal direction X, a plate (454) that is inserted into and hinged in the clevis (452) and fastened to the load support (108), and a shaft (456) that is secured to the plate (454) and is inserted into the orifices of the clevis (452), in that the clevis (452) comprises orifices (450) of elongate shape, the major axis of which is generally parallel to a transverse direction Y and into which the shaft (456) is inserted, and in that the plate (454) is inserted into the clevis (452) with a clearance between the clevis (452) and the plate (454) parallel to the longitudinal direction X.

4. Propulsion assembly (100) according to either of Claims 2 and 3, where the rear pylon attachment (416) comprises a first clevis (402) fastened below the load support (108), a second clevis (404) fastened above the pylon (104), and a double plate (406) disposed in the first clevis (402) and the second clevis (404), in that the double plate (406) is mounted in a hinged manner on the first clevis (402) about a first axis of rotation and on the second clevis (404) about two second axes of rotation, in that the first axis of rotation is generally parallel to the longitudinal direction X and included in the median plane XZ, and in that the two second axes of rotation are generally parallel to the longitudinal direction X and disposed on either side of the median plane XZ.

5. Propulsion assembly (100) according to Claim 1, where the front fan attachment (714) comprises a positioning assembly (314a) disposed on the median plane XZ, and two rotational systems (718) disposed on either side of the median plane XZ and of the positioning assembly (314a), in that the positioning assembly (314a) comprises a base (316) that is secured to the top part of the fan casing (204) and a peg that is secured to the load support (108), extends vertically and is inserted into a bore in the base (316), and in that each rotational system (718) fastens the fan casing (204) to the load support (108) and allows rotation about an axis perpendicular to the median plane XZ.

6. Propulsion assembly (100) according to Claim 4, where the rear pylon attachment (516) comprises two first clevises (502a-b), each of which is fastened below the load support (108), a second clevis (504) fastened above the pylon (104), and, for each first clevis (502a-b), a link rod (506a-b), in that each first clevis (502a-b) has a first axis of rotation generally parallel to the longitudinal direction X and the two first axes of rotation are disposed on either side of the median plane XZ, in that the second clevis (504) has three second axes of rotation generally parallel to the longitudinal direction X, one of which is central and included in the median plane XZ and the two others of which are lateral and disposed on either side of the median plane XZ, in that one of the link rods (506a) is mounted in a hinged manner on one of the first clevises (502a) about the corresponding first axis of rotation and on the second clevis (504) about the central second axis of rotation and a lateral second axis of rotation, and in that the other link rod (506b) is mounted in a hinged manner on the other of the first clevises (502b) about the corresponding first axis of rotation and on the second clevis (504) about the other lateral second axis of rotation.

7. Propulsion assembly (100) according to Claim 1, where the front fan attachment (614) comprises a first clevis (602) fastened in the top part of the fan casing (204) and has two first axes of rotation generally parallel to the longitudinal direction X and disposed on either side of the median plane XZ, for each first axis of rotation, a second clevis (604a-b) fastened to the load support (108) and disposed on the outside with respect to said first axis of rotation, where each second clevis (604a-b) has a second axis of rotation generally parallel to the longitudinal direction X, and for each first axis of rotation, a link rod (606a-b) mounted in a hinged manner on the first clevis (602) about said first axis of rotation and on the second clevis (604a-b) about the corresponding second axis of rotation.

8. Propulsion assembly (100) according to Claim 1, where the front fan attachment (914) comprises two first clevises (902a-b) that are fastened in the top part of the fan casing (204) on either side of the median plane XZ and each have a first axis of rotation generally parallel to the longitudinal direction X, for each first clevis (902a-b), a second clevis (904a-b) fastened to the load support (108) and disposed between said first clevis (902a-b) and the median plane XZ, where each second clevis (904a-b) has a second axis of rotation generally parallel to the longitudinal direction X, and for each first clevis (902a-b), a link rod (906a-b) mounted in a hinged manner on the first clevis (902a-b) about the corresponding first axis of rotation and on the second clevis (904a-b) about the corresponding second axis of rotation.

9. Propulsion assembly (100) according to either of Claims 7 and 8, where the front fan attachment (614, 914) has at least one finger (802) that is fastened to the load support (108) and extends radially with respect to the longitudinal direction X, and a groove (804) that is coaxial with the longitudinal direction X and realized at the perimeter of the fan casing (204), and in that the free end of each finger (802) sits in said groove (804).

10. Propulsion assembly (100) according to one of Claims 7 to 9, where the rear pylon attachment (716) comprises, on either side of the median plane XZ, a first clevis (702a-b) fastened below the load support (108), a second clevis (704a-b) fastened above the pylon (104), and a link rod (706a-b), in that each clevis (702a-b, 704a-b) has an axis of rotation generally perpendicular to the median plane XZ, and in that each link rod (706a-b) is mounted in a hinged manner on one of the first clevises (702a-b) about its axis of rotation and on one of the second clevises (704a-b) about its axis of rotation.

11. Aircraft (10) having at least one propulsion assembly (100) according to one of the preceding claims.
